# EUROPÄISCHE PATENTANMELDUNG

(11) **EP 0 585 658 A1**
(43) Veröffentlichungstag der Anmeldung: **09.03.1994**
(21) Anmeldenummer: 93112697.3
(22) Anmeldetag: 07.08.1993
(51) Int. Cl.: G02B 6/44

(54) **Vorrichtung zur Aufbewahrung der Einzel- und Bündeladern von Glasfaserkabeln in Verteilereinrichtungen der Telekomminikations- und Datentechnik**

(30) Priorität: 04.09.1992 DE 4229884
(71) Anmelder: KRONE Aktiengesellschaft, D-14167 Berlin (DE)
(72) Erfinder: Richter, Gerd Dipl.-Ing., D-14167 Berlin (DE)

(57) **Zusammenfassung**

Eine Vorrichtung zur Aufbewahrung der Einzel- und Bündeladern (16 bzw.5) von Glasfaserkabeln in Verteilereinrichtungen der Telekommunikations- und Datentechnik, die aus einem Gehäuse (24) aus mindestens einem in diesem klappbar gelagerten Kassettenkasten und aus einer darin lösbar gelagerten Spleißkassette (10) gebildet ist, soll dahingehend verbessert werden, daß bei einfacherem Aufbau des Kassettenkastens und einfacher Ausbildung der Spleißkassette (10) eine bruchsichere Lagerung der Einzel- und Bündeladern (16 bzw. 5) ermöglicht wird.

Hierzu ist erfindungsgemäß der Kassettenkasten aus einer mit einer Aufnahme (22) für die Spleißkassette (10) versehenen Trägerplatte (11) gebildet, die mit einem Schlitz (12) zur Durchführung der Einzel- und/oder Bündeladern (16;5) und mit auf beiden Seitenflächen angeordneten Elementen zur Halterung der Einzel-bzw. Bündeladern (16;5) versehen ist.

## Beschreibung

Die Erfindung bezieht sich auf eine Vorrichtung zur Aufbewahrung der Einzel- und Bündeladern von Glasfaserkabeln in Verteilereinrichtungen der Telekommunikations- und Datentechnik, aus einem Gehäuse, aus mindestens einem im Gehäuse klappbar gelagerten Kassettenkasten und aus einer darin lösbar gelagerten Spleißkassette.

Eine Vorrichtung der gattungsgemäßen Art ist aus der DE 35 40 472 C2 vorbekannt. Die hier beschriebene Spleißkassette ist in der DE 35 40 473 C2 näher erläutert. Bei der gattungsgemäßen Vorrichtung ist der Kassettenkasten zur Aufnahme einer Spleißkassette aus einem doppelwandigen Bauelement gebildet, das die aus Kunststoff ausgeformte Spleißkassette aufnimmt, die mit einem Wickelkörper mit einer Wickelnut zum Aufrollen der Einzel- und Bündeladern von Glasfaserkabeln versehen ist. Eine solche Vorrichtung ist einerseits hinsichtlich der Bauart des Kassettenkastens und der Spleißkassette aufwendig und andererseits hinsichtlich der Lagerung der Einzel- und Bündeladern von Glasfaserkabeln in der Wickelnut des zur Spleißkassette gehörenden Wickelkörpers und hinsichtlich der Sicherheit gegen eine Beschädigung oder einen Bruch der Einzel- und Bündeladern nicht optimal ausgebildet, da die Einzel- und Bündeladern gemeinsam aufgewickelt und dabei straff gespannt werden können.

Der Erfindung liegt von daher die Aufgabe zugrunde, die Vorrichtung der gattungsgemäßen Art baulich zu verbessern und insbesondere eine größere Sicherheit gegen Beschädigung oder Bruch von Einzel- und Bündeladern zu gewährleisten.

Zur Lösung dieser Aufgabe sieht die Erfindung vor, daß der Kassettenkasten aus einer mit einer Aufnahme für die Spleißkassette versehenen Trägerplatte gebildet ist, die mit einem Schlitz zur Durchführung der Einzel- und/oder Bündeladern und mit auf beiden Seitenflächen angeordneten Elementen zur Halterung der Einzel- bzw. Bündeladern versehen ist. Die erfindungsgemäße Vorrichtung sieht somit zur Aufnahme der Spleißkassette, die ein Standardbauteil sein kann, nur eine einzelne Trägerplatte, die aus einem Trägerblech gebildet sein kann, vor, die mit einer Aufnahme für die Spleißkassette versehen ist und aus der die notwendigen Elemente zur Halterung der Einzel-bzw. Bündeladern auf beiden Seitenflächen ausgebogen sind. In die erfindungsgmäße, flächige Trägerplatte wird die, eine Bündelader mit einer Einzelader verbindende Spleißkassette eingelegt, woraufhin die Einzeladern auf einer Seitenfläche der Trägerplatte und die Bündeladern auf der anderen Seitenfläche der Trägerplatte in die von den Laschen gebildeten Freiräume eingelegt werden. Somit werden die Einzeladern und Bündeladern getrennt voneinander und nacheinander sortiert und von der Trägerplatte aufgenommen, wobei im Gegensatz zum Stand der Technik kein Wickelvorgang erfolgt, so daß die Bündel- und Einzeladern nicht straff gehalten werden müssen.

Das unabhängig voneinander ausgeführte Einbringen der Einzeladern und Bündeladern auf unterschiedliche Seiten der Trägerplatte ermöglicht eine Anpassung der Bedienungsperson an die äußerst bruchempfindlichen Einzeladern, die mit großer Sorgfalt unter die Laschen der Trägerplatte geschoben werden können.

Weitere vorteilhafte Ausgestaltungen der Erfindung ergeben sich aus den Unteransprüchen. Diese zeigen insgesamt eine äußerst einfache Ausbildung des Kassettenkastens zur Aufnahme der Spleißkassette, welcher nur aus der einstückigen Trägerplatte gebildet ist, aus der die notwendigen Laschen und die Aufnahmeöffnung zur Halterung der Spleißkassette U-förmig freigeschnitten und L-förmig abgebogen sind.

Die Erfindung ist nachfolgend anhand eines in den Zeichnungen dargestellten Ausführungsbeispieles einer Vorrichtung zur Aufbewahrung der Einzel- und Bündeladern von Glasfaserkabeln in Verteilereinrichtungen der Telekommunikations- und Datentechnik näher erläutert. Es zeigen:
- Fig. 1: eine perspektivische Darstellung der Vorrichtung bei aus dem Gehäuse herausgeklappter Trägerplatte mit darin aufgenommener Spleißkassette und
- Fig. 2: eine vereinfacht dargestellte Vorderansicht bei eingeklappter Trägerplatte.

Eine aus mehreren Einzeladern 16 bestehende Bündelader 5 ist an einer gehäusefesten Halterung 1 mittels Kabelbindern 2 oberhalb eines aus zwei Seitenwänden 3,4 gebildeten Gehäuses 24 für eine Trägerplatte 11 fixiert. Die beiden Seitenwände 3,4 des Gehäuses 24 und die Trägerplatte 11 bestehen jeweils aus Blech der erforderlichen Stärke und Qualität. Der Mittelteil 23 der Trägerplatte 11 ist zur Ausbildung einer Aufnahmeöffnung 22 für eine Spleißkassette 10 aus der Trägerplatte 11 U-förmig freigeschnitten und L-förmig auf eine Seite der Trägerplatte 11 ausgebogen. Ferner sind Laschen 7,8 aus den Randbereichen der Trägerplatte 11 U-förmig herausgeschnitten und ebenfalls L-förmig auf die gegenüberliegenden Seiten und zur Aufnahmeöffnung 22 hin ausgebogen. Ein Schlitz 12 erstreckt sich durch die Trägerplatte 11 hindurch von einer Stirnseite bis zur Aufnahmeöffnung 22.

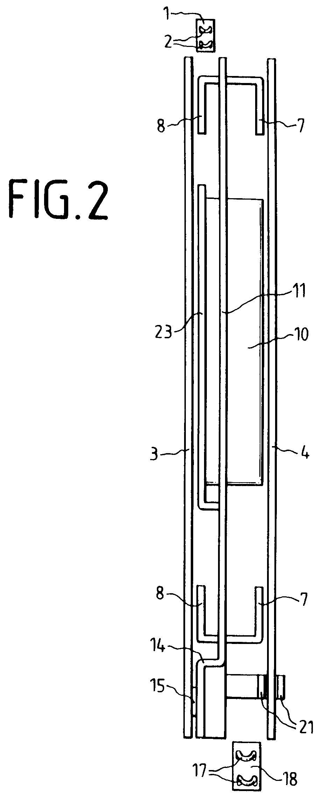

An einer Ecke der Trägerplatte 11 ist die Lagerung 15 für die Trägerplatte 11 aus einer aus dieser ausgeformten Kröpfung 14 gebildet, durch welche hindurch innerhalb einer Bohrung ein Lagerstift greift, der in der in Fig. 2 linken Seitenwand 3 des Gehäuses 24 gelagert ist.

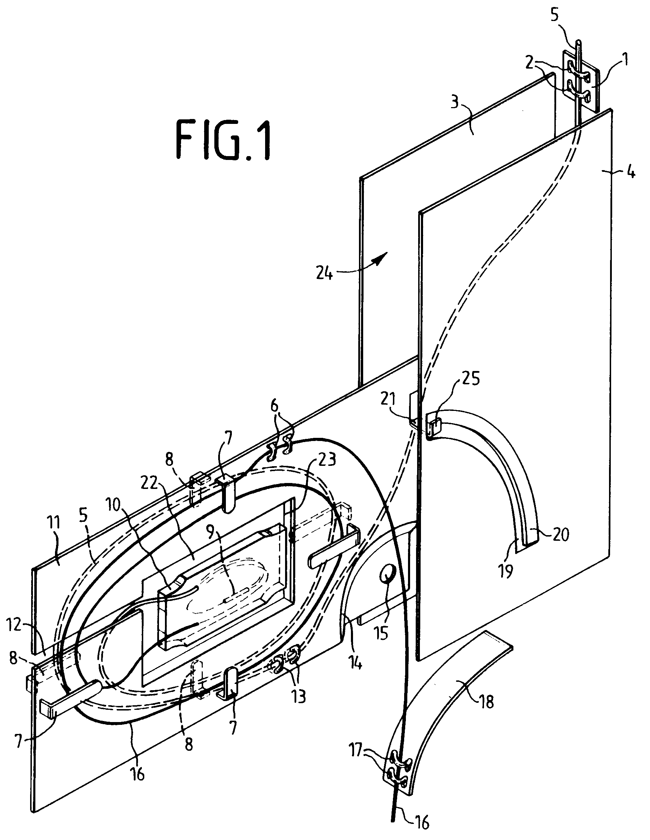

Die mit einer vorherbestimmten Restlänge an der Halterung 1 mittels der Kabelbinder 2 abgefangene Bündelader 5 ist auf der in Fig. 1 rückwärtigen und Fig. 2 linken Seite der Trägerplatte 11 geführt, mittels randseitiger Kabelbinder 13 an der Trägerplatte 11 abgefangen, hinter die linksseitigen L-förmigen Laschen 8 eingelegt und bis zum Spleiß 9 der in der Aufnahmeöffnung 22 befindlichen Spleißkassette 10 geführt, wobei die in der Darstellung gemäß Fig. 1 in Uhrzeigerrichtung von der Trägerplatte 11 aufgenommene Bündelader 5 durch den Schlitz 12 in der Trägerplatte 12 hindurchgeführt wird und auf der in Fig. 1 vorderen Seite und auf der in Fig. 2 rechten Seite der Trägerplattte 11 die Aufnahmeöffnung 22 für die Spleißkassette 10 erreicht. Diese ist ein Standardbauteil, das mittels einer nicht näher dargestellten lösbaren Verschraubung in der Aufnahmeöffnung 22 fixiert ist. Vom Spleiß 9 der Spleißkassette 10 verlaufen die Einzeladern 16 ebenfalls in Uhrzeigerrichtung auf der in Fig. 1 vorderen Seite und in Fig. 2 rechten Seite der Trägerplatte 11 und sind dort in die L-förmigen Laschen 7 eingelegt und mittels Kabelbindern 6 im Randbereich der Trägerplatte 11 fixiert. Die Einzeladern 16 verlaufen dann zu einer gehäusefesten Halterung 18, an der die Einzeladern 16 mittels Kabelbindern 17 fixiert sind. Die weitere Führung der Einzeladern 16 sowie die Zuführung der Bündelader 5 sind nicht näher dargestellt.

Zur Führung der Trägerplatte 11 beim Herausklappen aus dem aus den beiden Seitenwänden 3,4 gebildeten Gehäuse 24 ist an der der Lagerung 15 gegenüberliegenden Ecke der Trägerplatte 11 ein L-förmiger Haltebügel 21 durch U-förmige Freischneidung aus der Trägerplatte 11 ausgebildet und in einem bogenförmigen Schlitz 19 der angrenzenden Seitenwand 4 des Gehäuses 24 geführt, wobei der den abgebogenen Lappen 25 des L-förmigen Haltebügels 21 führende Randbereich des Schlitzes 19 mit einer nach innen umgebogenen Kröpfung 20 versehen ist, so daß mehrere Gehäuse 24 dicht nebeneinander anordenbar sind.

Die auf einem Spleißtisch fertige Spleißkassette 10 wird nach dem Spleißvorgang in der Aufnahmeöffnung 22 der Trägerplatte 11 mittels einer nicht näher dargestellten Verschraubung befestigt, wobei die Bündelader 5 durch den Schlitz 12 geführt werden muß und wobei die Einzeladern 16 nicht mit der Bündelader 5 verdreht sein dürfen. Dann wird die Bündelader 5 beginnend an den diese an der Trägerplatte 11 fixierenden Kabelbindern 13 in die linksseitigen L-förmigen Laschen 8 eingelegt, wobei je nach Restlänge der Bündelader 5 mehrere Windungen möglich sind. Anschließend werden die Einzeladern 16 gemeinsam, beginnend am durch die Kabelbinder 6 gebildeten Festpunkt, unter die rechtsseitigen L-förmigen Laschen 7 gelegt, wobei je nach Restlänge der Einzeladern 16 ebenfalls mehrere Windungen möglich sind. Die Aufnahmeräume für die Bündelader 5 und die Einzeladern 16 zu beiden Seiten der blechförmigen Trägerplatte 11, die durch mehrere blechförmige Laschen 7, 8 gebildet werden, sind so groß bemessen, daß auch Längentoleranzen der Restlängen untergebracht werden können.

Die Trägerplatte 11 wird anschließend um die Lagerung 15 um 90° nach oben in das Gehäuse 24 geklappt, so daß die Trägerplatte 11 vollkommen zwischen den Seitenwänden 3 und 4 liegt. Als Anschlag für die beiden Endpositionen, herausgeklappter und eingeklappter Zustand, ist der im Schlitz 19 laufende Haltebügel 21 vorgesehen, wobei die Kröpfung 20 des Randbereiches des Schlitzes 19 dazu dient, eine Aneinanderreihung mehrerer Gehäuse 24 zu ermöglichen, weil somit verhindert wird, daß der Haltebügel 21 mit seinem Lappen 25 über die Außenfläche der Seitenwand 4 hinaussteht.

Beim Einklappen wird die Bündelader 5 in einem halbkreisförmigen Bogen von 180° gelegt. Die Einzeladern 16 legen sich S-förmig um die Halterung 18 und die Laschen 7 der Trägerplatte 11.

### BEZUGSZEICHENLISTE

- 1: Halterung
- 2: Kabelbinder
- 3: Seitenwand
- 4: Seitenwand
- 5: Bündelader
- 6: Kabelbinder
- 7: Lasche
- 8: Lasche
- 9: Spleiß
- 10: Spleißkassette
- 11: Trägerplatte
- 12: Schlitz
- 13: Kabelbinder
- 14: Kröpfung
- 15: Lagerung
- 16: Einzelader
- 17: Kabelbinder
- 18: Halterung
- 19: Schlitz
- 20: Kröpfung
- 21: Haltebügel
- 22: Aufnahmeöffnung
- 23: Mittelteil
- 24: Gehäuse
- 25: Lappen

## Patentansprüche

1. Vorrichtung zur Aufbewahrung der Einzel- und Bündeladern von Glasfaserkabeln in Verteilereinrichtungen der Telekommunikations- und Datentechnik, aus einem Gehäuse, aus mindestens einem im Gehäuse klappbar gelagerten Kassettenkasten und aus einer darin lösbar gelagerten Spleißkassette,
**dadurch gekennzeichnet,**
daß der Kassettenkasten aus einer mit einer Aufnahme für die Spleißkassette (10) versehenen Trägerplatte (11) gebildet ist, die mit einem Schlitz (12) zur Durchführung der Einzel- und/oder Bündeladern (16;5) und mit auf beiden Seitenflächen angeordneten Elementen zur Halterung der Einzel- bzw. Bündeladern (16,5) versehen ist.

2. Vorrichtung nach Anspruch 1, dadurch gekennzeichnet, daß die Aufnahme für die Spleißkassette als in die Trägerplatte (11) eingebrachte Aufnahmeöffnung (22) gebildet ist.

3. Vorrichtung nach Anspruch 2, dadurch gekennzeichnet, daß die Aufnahmeöffnung (22) für die Spleißkassette (10) aus dem U-förmig freigeschnittenen Mittelteil (23) der Trägerplatte (11) gebildet ist, der L-förmig auf eine Seite der Trägerplatte (11) ausgebogen ist.

4. Vorrichtung nach einem der Ansprüche 1 bis 3, dadurch gekennzeichnet, daß die Trägerplatte (11) etwa mittig zwischen den Seitenwänden (3,4) des Gehäuses (24) gelagert ist.

5. Vorrichtung nach einem der Ansprüche 1 bis 4, dadurch gekennzeichnet, daß die Elemente zur Halterung der Einzel- bzw. Bündeladern (16,5) aus Laschen (7,8) gebildet sind.

6. Vorrichtung nach einem der Ansprüche 1 bis 4, dadurch gekennzeichnet, daß die Elemente zur Halterung der Einzel- bzw. Bündeladern (16,5) aus großflächig umgebogenen Wandungsteilen gebildet sind.

7. Vorrichtung nach einem der Ansprüche 1 bis 6, dadurch gekennzeichnet, daß die Laschen (3,3) zur Halterung der Einzel- bzw. Bündeladern (16,5) an den Randseiten der Trägerplatte (11) U-förmig aus dieser herausgeschnitten und L-förmig auf die gegenüberliegenden Seiten zum Mittelteil (23) der Trägerplatte (11) ausgebogen sind.

8. Vorrichtung nach einem der Ansprüche 1 bis 7, dadurch gekennzeichnet, daß die Lagerung (15) der Trägerplatte (11) aus einer an einer Ecke der Trägerplatte (11) ausgeformten Kröpfung (20) der Trägerplatte (11) ausgebildet ist.

9. Vorrichtung nach einem der Ansprüche 1 bis 8, dadurch gekennzeichnet, daß an der der Lagerung (15) gegenüberliegenden Ecke der Trägerplatte (11) ein L-förmiger Haltebügel (21) durch U-förmige Freischneidung aus der Trägerplatte (11) ausgebildet und in einem bogenförmigen Schlitz (19) der angrenzenden Seitenwand (4) des Gehäuses (24) geführt ist.

10. Vorrichtung nach Anspruch 9, dadurch gekennzeichnet, daß der den abgebogenen Lappen (25) des L-förmigen Haltebügels (21) führende Randbereich des Schlitzes (19) innen mit einer Kröpfung (20) versehen ist.
